# EUROPEAN PATENT SPECIFICATION

(11) **EP 3 532 385 B1**
(45) Date of publication and mention of the grant of the patent: **10.03.2021**
(21) Application number: 17792156.6
(22) Date of filing: 26.10.2017
(51) Int. Cl.: B64D 11/06

(54) **A PASSENGER SEATING ARRANGEMENT WITH INWARDLY FACING SEAT UNITS**
PASSAGIERSITZANORDNUNG MIT GANGZUGEWANDTEN SITZEINHEITEN
AGENCEMENT DE SIÈGE DE PASSAGER AVEC DES UNITÉS DE SIÈGE ORIENTÉES VERS UN COULOIR

(30) Priority: 28.10.2016 GB 201618272
(43) Date of publication of application: 04.09.2019
(73) Proprietor: Acumen Design Associates Ltd, London WC1V 7BD (GB)
(72) Inventor: NICHOLAS, Richard Peter John, Clerkenwell London EC1M 4AY (GB)
(74) Representative: Abel & Imray
(86) International application number: PCT/GB2017/053235
(87) International publication number: WO 2018/078377

(56) References cited:
- US-A1- 2014 283 296
- US-A1- 2015 158 400
- US-A1- 2015 166 184

## Description

### Technical Field

The present invention relates to an aircraft passenger seating arrangement, and to pairs of seat units for use in an aircraft passenger seating arrangement.

### Background of the Invention

Aircraft passenger seating arrangements having convertible seat units that have both a seat configuration, and a flat-bed configuration are well-known. These convertible seat units are typically provided in business class or first class cabins of an aircraft. In the seat configuration, the seat unit typically provides a relatively upright seat, whereas in the bed configuration, the seat unit tends to form a substantially planar sleeping surface for supporting the passenger. The seat units shown in GB2326824 (British Airways), WO03013903 (Virgin Atlantic) and US 7,178,871 (British Airways) are examples of such convertible seat units (often referred to as having 'lie-flat' seats) that have both a seat configuration, and a flat-bed configuration which offers improved comfort over a reclined seat. Lie-flat seats have been increasingly popular over the last decade or so.

GB2326824 and WO03013903 mentioned above are examples of so-called herringbone arrangements in which the seats are at an angle to the longitudinal axis of the aircraft. US 8,348,195 (American Airlines) discloses a herringbone arrangement in which alternate seat units face in alternate directions. By angling the seat units in such a way, a relatively high packing efficiency may be obtained whilst maintaining direct access to an aisle.

US 7,918,504 (Thompson) discloses an aircraft cabin in which there are rows of seat units, each unit having a forward facing lie-flat seat that faces in a direction parallel to the longitudinal axis of the cabin. Successive rows of seats are staggered in a transverse direction such that a console between two seat units in one row, is directly in front of a seat unit in the row behind. The console provides an enclosed foot-well for that rear seat unit. WO 2009/073244 (BE Aerospace) discloses an aircraft cabin in which pairs of seat units are angled outwardly to the longitudinal axis of the cabin by about 15 degrees. As with US 7,918,504 the feet of a passenger in one seat unit may be accommodated in a foot-well that is located between the two seat units in the row in front. US 7,178,871 (mentioned above), and WO 2007/072045 (also British Airways) are examples of other types of seating arrangements, in which pairs of seat units face in opposite directions. Such an arrangement may be space-efficient across the width of the cabin because the seating space of one seat unit may extend over the leg space of the adjacent, oppositely facing, seat unit. There is a problem with the above-mentioned seat designs in that to access seat units that are not directly adjacent an aisle, it tends to be necessary for the passenger to 'step-over' the space of a neighbouring passenger. This can detrimentally affect the feeling of privacy and personal space for the passengers in one or both of the relevant seats.

WO2014049362 (Acumen Design Associates) describes an arrangement having a plurality of pairs of seat units, each pair comprising a non-aisle seat unit arranged parallel to the longitudinal axis of the aircraft, and an aisle seat unit angled thereto, so as to provide a passenger access path to the non-aisle seat unit. Such an arrangement addresses some of the above-mentioned problems, but there remains a desire to provide other space-efficient arrangements that have adequate access to each seat unit.

Document US2015158400 discloses a column of seat units arranged in pairs, each pair being consecutively orientated face to face. The seats are adjustable into bed configuration and are also adjustable between shared and private configurations.

### Summary of the Invention

According to a first aspect, there is provided a passenger seating arrangement in an aircraft cabin, the passenger seating arrangement comprising a column of seat units located adjacent an aisle, the column of seat units and the aisle both extending in a longitudinal direction parallel to the longitudinal axis of the aircraft cabin. The column comprises a multiplicity of pairs of seat units arranged consecutively along the longitudinal direction. Each seat unit is configurable between a seating configuration and a flat-bed configuration. Each pair of seat units comprises two inwardly facing seat units, each seat unit being angled at an acute angle to the longitudinal axis of the aircraft and facing inwardly towards the aisle. Wherein each pair of seat units is associated with a dedicated entrance way, each entrance way being a shared entrance way for providing access from the aisle to both of the seat units in that pair.

This aspect recognises that, in the context of an inwardly-facing herringbone arrangement (i.e. having pairs of inwardly-facing seat units), the packing efficiency of the seating arrangement can be improved by providing shared entrance ways to both seat units in each pair. For example, the floor-space that would otherwise be used for a dedicated entrance to only one of the seat units can instead be occupied by part of the other seat unit in the pair.

The shared entrance is preferably the only entrance to the two seat units. The two seat units are preferably not accessible from another entrance. The number of entrance ways is preferably equal to half of the number of seat units within the multiplicity of pairs of seat units.

The entrance way is preferably an obstacle free entrance way. An access path preferably extends from the shared entrance way to the seat units. The access path is preferably obstacle free. The access path is preferably a permanent access path. The pairs of seat units are preferably arranged such that the usability of the access path to access one of the seat units, is preferably independent of whether the other seat unit is in the seat configuration or in the flat-bed configuration. For example it is preferably not necessary to 'step-over' one of the seat units in the pair, in order to access the other seat unit of the pair. The pairs of seat units may be arranged such that the usability of the access path to access one of the seat units, is preferably independent of whether or not a passenger is occupying the other seat unit.

Each seat unit is configurable between a seating configuration and a flat-bed configuration. This type of reconfigurable seat unit per se is well known in aircraft seating, especially in business class seating. Such a seat unit may sometimes be referred to as a "lie-flat seat".

A seat unit may have a foot-receiving end. The foot receiving end is preferably configured to receive a passenger's feet when the seat unit is in the flat-bed configuration. A seat unit may comprise a head-receiving end. The head receiving end is preferably configured to receive a passenger's head when the seat unit is in the flat-bed configuration.

A seat unit may have a seat body comprising moveable seating elements arranged such that when the seat unit is in the seating configuration the seating elements form a passenger seat but when the seat unit is in the flat-bed configuration, the seating elements form a substantially flat sleeping surface. The moveable seating elements may, for example, comprise a seat pan, a seat back, and/or a footrest.

In some embodiments, the moveable seating elements may form substantially all of the sleeping surface when the seat unit is in the flat-bed configuration. In other embodiments, the moveable elements need not necessarily form all of the sleeping surface when the seat unit is in the flat-bed configuration. For example, in some embodiments of the invention, each seat unit may comprises an ancillary bed surface. In the flat-bed configuration, the ancillary bed surface may form part of the sleeping surface in conjunction with the moveable seating elements. The ancillary bed surface may be fixed. The ancillary bed surface may be removeable (for example it may be created by an insert element). The ancillary bed surface may be at a height such that it is co-planar with the flat sleeping surface formed by seating elements when the seat unit is in the flat-bed configuration. The ancillary bed surface may form an extension of the flat sleeping surface formed by seating elements when the seat unit is in the flat-bed configuration. A seat unit may comprise such an ancillary bed surface at a foot receiving end of the seat unit. Alternatively or additionally, the seat unit may comprise such an ancillary bed surface at a head receiving end of the seat unit.

In some embodiments, both the seat units within each pair may have the same features. However, in other embodiments of the invention, one of the seat units in each pair may have different features and/or differently shaped features, to the other seat unit in each pair. For example in some embodiments described herein, an aft-seat unit in each pair may have different features and/or differently shaped features to the fore-seat unit in that pair.

Each seat unit may comprise a central axis. The central axis preferably extends through the centre of the seat (for example it may bisect a seat pan and/or back-rest of the seat when in the seating configuration). The central axis of each seat unit is preferably fixed (for example the seat units preferably do not comprise swivel seats). The angle of the seat unit is preferably defined as the angle between the central axis and the longitudinal axis of the aircraft.

The seat units may be facing forwards. The seat units may be facing backwards. It will be appreciated that the inward facing of the seat units refers to their orientation relative to the aisle (i.e. that the passenger would be facing towards the aisle). In contrast, the forward /backward facing of the seat units refers to their orientation relative to the direction of travel of the aircraft (i.e. whether the passenger would be facing towards the front of the aircraft or towards the rear of the aircraft).

All the multiplicity of pairs of seat units are preferably identical. Thus, the column is preferably formed by a repeating pattern of identical pairs of seat units. The pairs of seats units are preferably adjacent one another along the longitudinal direction. Within a column, the pairs of seat units are arranged in the same orientation.

The column of seat units extends in a longitudinal direction. The lateral extent of each seat units within each pair of seat units (i.e. the width perpendicular to the longitudinal direction) is preferably equal. Thus, the seat units in each pair preferably extend to a shared, substantially linear, longitudinal boundary along the aisle.

The acute angle at which the inwardly-facing seat units in each pair are orientated, is preferably the same (i.e. the seat units within each pair are preferably parallel to one another). Embodiments have been found to be especially beneficial when used in conjunction with a relatively high herringbone angle (i.e. with seat units forming a relatively high acute angle to the longitudinal axis of the aircraft cabin). The acute angle at which the seat units are orientated may be at least 35 degrees or more. The acute angle may be at least 40 degrees or more. The acute angle may be less than 60 degrees, or even less than 55 degrees. The acute angle may be in a range between 35 and 55 degrees.

Each pair of seat units comprises a first seat unit and a second seat unit. The first seat unit is preferably a fore-seat unit, and the second seat unit is preferably an aft-seat unit, the fore-seat unit being positioned forward of the aft-seat unit in the longitudinal direction.

The first and second seat units may be positioned either side of a notional centre-line extending between the two seat units. The notional centre-line may be mid-way between the respective central axes of each seat unit.

The first seat unit may comprise an opening through which a passenger may pass to access the first seat unit. The second seat unit may comprise an opening through which a passenger may pass to access the second seat unit. Each opening is preferably accessible from the aisle via the shared entrance way. The first and second seat units preferably comprise respective openings on a common adjoining side. For example, the first seat unit may comprise an opening on the left-hand side of the first seat unit (i.e. to the left-hand side of the central axis of the first seat unit), and the second seat unit may comprise an opening on the right-hand side of the second seat unit (i.e. to the right-hand side of the central axis of the second seat unit). Since the first and second seat units both face the same, inward, direction, it will be appreciated that the left and right-hand sides of each seat unit are along a common adjoining side. The common adjoining side preferably faces (and may be coincident with) the notional centre-line between the seat units.

Providing an arrangement in which the first and second seat units comprise opening along a common adjoining side has been found to be especially beneficial. In particular, such an arrangement may provide an obstacle free area for use by passengers when accessing either seat unit, without necessarily impacting on the personal space of any passenger in one of the seat units. An access path preferably extends from the shared entrance way to the seat units, via the respective openings. The access path is preferably obstacle free. The access path is preferably a permanent access path. The seat units are preferably arranged such that the usability of the access path to access one of the seat units, is preferably independent of whether the other seat unit is in the seat configuration or in the flat-bed configuration. For example it is preferably not necessary to 'step-over' one of the seat units in the pair, in order to access the other seat unit of the pair.

Each seat unit may comprise a perimeter structure. At least some of the perimeter structure may form part of the perimeter structure of the pair of seat units. At least some of the perimeter structure may be coincident between the two seat units. The perimeter structure may comprise a wall structure. The opening of each seat unit is preferably defined by an opening in the perimeter structure. The pair of seat units may comprise a perimeter structure. The perimeter structure may form a perimeter around the pair of seat units, with the shared entrance forming an entrance through the perimeter. Part of the perimeter structure may be the aircraft sidewall. The perimeter structure may form part of the inter-pair, and/or the intra-pair, privacy screen.

Each opening may be created by the respective seat units being open-sided along at least part of the perimeter. The respective seat units may be open-sided along only one part of the perimeter. The first and second seat units are preferably both open-sided along the common adjoining side.

Each pair of seat units may be separated from an adjacent pair of seat units in the column by an inter-pair privacy screen. The inter-pair privacy screen preferably extends across the width of each pair (for example from the sidewall of the aircraft to the aisle). Each pair of seat units may comprise an intra-pair privacy screen positioned between the two seat units in a pair, for providing privacy between those two seat units within each pair. The inter-pair privacy screen may be larger (for example longer) than the intra-pair privacy screen. For example, the intra-pair privacy screen may extend only part-way between the seat units in each pair, thereby leaving the respective opening in each seat unit through which a passenger may pass.

In embodiments in which the seat units comprise moveable seating elements, the moveable seating elements may comprise a seat pan. The seat pan of each seat unit may comprise a chamfered corner.

In embodiments in which the seat pan is moved forwards from the seat configuration to the flat-bed configuration, the chamfered corner may reduce the width of the sleeping surface towards the foot receiving end. The chamfered corner on each seat pan may be on the common adjoining side of the two seat units. For example the chamfered corner may be on the left-hand side of the fore-seat unit (as viewed from that seat pan), and on the right-hand side of the aft-seat unit (as viewed from that seat unit). Having the chamfered corner on the common adjoining side may be beneficial because the chamfered corners may complement each other, especially when the seat units are in the flat-bed configuration, to create improved access. For example, the chamfered corners may enable part of a floor area to remain accessible (that would otherwise have been within the footprint of the un-chamfered corner). The chamfered corner may be such that the accessible floor area is suitable for a passenger to use for accessing the seat unit.

Each seat unit may comprise a foot receiving end having a wall defining a partially enclosed space for receiving the passenger's feet. Alternatively or additionally, the foot receiving end may comprise an ancillary bed surface. The ancillary bed surface may be coplanar with the sleeping surface when the seat unit is in the flat-bed configuration, such that the ancillary bed surface acts as a bed-extension surface. The ancillary bed surface may be suitable as a foot rest when the seat unit is in a seating configuration. The ancillary bed surface may part of an ottoman. The ancillary bed surface may be fixed. The ancillary bed surface may be moveably mounted (for example hinged) such that it is configurable between a deployed position in which it is coplanar with the sleeping surface when the seat unit is in the flat-bed configuration, and a stowed configuration in which is moved away to facilitate access through the shared entrance way. In embodiments in which the foot-receiving end of both seat units is adjacent the entrance way, having the ancillary bed surface in the stowed position may increase the useable width of the shared entrance way.

According to another aspect, there is provided a passenger seating arrangement in an aircraft cabin, the passenger seating arrangement comprising a column of seat units located adjacent an aisle on one side and adjacent a sidewall on the other side, the column of seat units and the aisle both extending in a longitudinal direction parallel to the longitudinal axis of the aircraft cabin, and wherein the column comprises a multiplicity of pairs of seat units arranged consecutively along the longitudinal direction, and wherein each seat unit is configurable between a seating configuration and a flat-bed configuration, and each seat unit having a seat body comprising moveable seating elements arranged such that when the seat unit is in the seating configuration the seating elements form a passenger seat but when the seating unit is in the flat-bed configuration, the seating elements form a substantially flat sleeping surface, and wherein each pair of seat units comprises a first seat unit and a second seat unit, the first and second seat units both being angled at an acute angle to the longitudinal axis of the aircraft and both facing inwardly towards the aisle, and wherein in each pair, when the seat units are in the seating configuration, the seat body of the second seat unit is staggered with respect to the seat body of the first seat unit such that there is an offset, in a lateral direction, between the seat body of the first seat unit and the seat body of the second seat unit, such that the seat body of the second seat unit is located closer to the aisle than the seat body of the first seat unit.

It is the accepted design wisdom that in a herringbone arrangement, each seat unit in a column should be staggered with respect to the adjacent seat such that they are all at the same lateral position as the other seat units in that column (for example see WO03013903 (Virgin Atlantic)). To date, this has been considered the most space-efficient approach (for a given bed length) because it was thought to optimise the use of the space close to the sidewall. This aspect of the present invention recognises that an overall space saving can be obtained (if desirable) by staggering the seat body of the second seat unit differently; specifically, by staggering it such that there is an offset, in a lateral direction, between the seat body of the first seat unit and the seat body of the second seat unit (when the seat units are in the seating configuration), the overall longitudinal extent of the pair of seat units can be reduced. Given the seat units are in a herringbone arrangement, a reduction in the magnitude of stagger enables a corresponding reduction in the overall longitudinal extent of the seat bodies (that longitudinal extent tends to be reduced by the magnitude of the lateral offset/tan[acute angle of the herringbone]).

The lateral offset is present when the seat units are in the seating configuration. In some embodiments, a seat body may be moveable along the axis of the seat unit (described in more detail below). In such cases, it will be appreciated that the offset is when the seat body is in its rearmost (i.e. most staggered) location, as this is the location that tends to determine the maximum longitudinal extent of the seat unit(s).

The pair of seat units may be arranged such that a lateral offset is also present between the seat bodies when the seat units are in the flat-bed configuration.

Each of the seat units may comprise a rearward space for receiving the passenger's head when the seat unit is in the flat-bed configuration. The rearward space may be behind the seat when the seat unit is in the seating configuration. The rearward space may be behind the seat body. The rearward space may be at a head-receiving end of the seat unit. In some embodiments, the space may be occupied by a moveable seating element (when the seat unit is in the flat-bed configuration). In some embodiments, the rearward space may be occupied by an ancillary bed surface. The ancillary bed surface may be at a height such that it is co-planar with the flat sleeping surface formed by seating elements when the seat unit is in the flat-bed configuration. The ancillary bed surface may be fixed. The ancillary bed surface is preferably a bed extension surface configured to form part of the flat sleeping surface when the seat unit is in the flat-bed configuration.

When the first and second seat units are in the flat-bed configuration, the length of the flat sleeping surface within the rearward space of the second seat, may be greater than the length of the flat sleeping surface within the rearward space of the first seat unit. In the flat-bed configuration, the length of the flat sleeping surface provided by the (rearward) ancillary bed surface of the second seat, may be greater than the length of the flat sleeping surface provided by the (rearward) ancillary bed surface of the first seat. Although the seat body of the second seat unit is laterally offset/staggered, any potential loss in bed length can be recovered by using a longer rearward space (for example occupied by an ancillary bed surface) behind the seat body (there being more rearward space given the offset/stagger of the seat body).

The length of the flat sleeping surface provided by the moveable elements of each seat unit, in the flat-bed configuration, may be substantially equal.

Each of the seat units may comprise a forward ancillary bed surface in front of the seat body. The forward ancillary bed surface may be at a foot receiving end. The forward ancillary bed surface may be, and ottoman or part of an ottoman. The forward ancillary bed surface is preferably a bed extension surface configured to form part of the flat sleeping surface when the seat unit is in the flat-bed configuration. The forward ancillary bed surface may be at a height such that it is co-planar with the flat sleeping surface formed by seating elements when the seat unit is in the flat-bed configuration.

The length of the flat sleeping surface provided by the forward ancillary bed surface of the second seat, is preferably less than the length of the flat sleeping surface provided by the forward ancillary bed surface of the first seat.

The total length of the flat sleeping surface of each seat unit, in the flat-bed configuration, may be substantially equal. Thus, in embodiments in which the forward ancillary bed surfaces and/or the rearward space (or rearward ancillary bed surfaces) of each seat unit contribute differing respective length of flat sleeping surface, the proportion of the total length of the flat sleeping surface provided by the different parts of the seat unit will differ between the first and second seat units in each pair.

According to the invention, there is provided an aircraft cabin comprising a passenger seating arrangement and an aisle, the passenger seating arrangement comprising a column of seat units located adjacent the aisle, the column of seat units and the aisle both extending in a longitudinal direction parallel to the longitudinal axis of the aircraft cabin, and wherein the column comprises a multiplicity of pairs of seat units arranged consecutively along the longitudinal direction, and within the column the pairs of seat units are arranged in the same orientation, wherein each seat unit is configurable between a seating configuration and a flat-bed configuration, and each seat unit having a seat body comprising moveable seating elements arranged such that when the seat unit is in the seating configuration the seating elements form a passenger seat but when the seating unit is in the flat-bed configuration, the seating elements form a substantially flat sleeping surface, and wherein each pair of seat units comprises a first seat unit and a second seat unit, the first and second seat units both being angled at an acute angle to the longitudinal axis of the aircraft cabin and both facing inwardly towards the aisle, and wherein in the seating configuration the seat bodies of the first and second seat units are moveable, relative to one another, in a direction parallel to the axes of the respective seat units, between a private configuration in which the seat body of the second seat unit is staggered rearwards of the seat body of the first seat unit, and a sharing configuration in which the seat bodies are substantially side-by-side to enable passengers in the respective seat units to interact.

This aspect of the present invention recognises that by providing seat bodies in each pair that are moveable, relative to one another, between the private configuration and the sharing configuration, extra functionality can be provided in the seating arrangement. In particular, each pair of seat units can offer the flexibility of being used in a private manner (e.g. for two passengers travelling independently) or of being used in a shared manner in which the passengers can interact (e.g. for two passengers travelling together).

In the shared configuration, the seat bodies are substantially side-by-side to enable passengers in the respective seat units to interact. In the shared configuration, the passengers are preferably within line of sight of each other. In the shared configuration, the seat bodies are substantially side-by-side. Thus, the seat units may be sufficiently un-staggered (which may also be referred to as being in-line) to enable passengers in the respective seat units to interact. It will be appreciated that the relative stagger of the seat bodies in the shared configuration is relative to the seat units, and not relative to the reference frame of the cabin per se. Thus, although the seat bodies are side-by-side, they extend side by side in a direction at an angle to the longitudinal direction (typically 90 degrees + the acute angle) and are thus staggered in a reference frame of the cabin per se.

The seat body of each seat unit is preferably arranged to maintain the same orientation in both the private and the shared configuration. For example the recline of the seat body preferably remains the same in both configurations.

In the private configuration, the seat body of each unit may be at its maximum rearward position. In some embodiments of the invention, the maximum rearward position of the seat body of each unit may be the same. In some embodiments, the maximum rearward position of the seat body of each seat unit in the pair of units may differ (for example in embodiments having the second aspect of the invention, the seat body of the second seat unit may be staggered with respect to the seat body of the first seat unit such that there is an offset, in a lateral direction).

In the private configuration, an intra-pair privacy screen may be arranged to screen a passenger in the first seat unit from a passenger in the second seat unit. In the private configuration, the seat bodies of each unit may be screened by the intra-pair privacy screen. In the shared configuration the seat body of the second seat may be moved into a position in which a passenger in the seat unit is not screen by the intra-pair privacy screen (for example they may be forward of at least a portion of it).

In principle, the seat bodies in both seat units may be moveable along their respective axes (between the private and sharing configuration). The axes of the seat units in each pair are preferably parallel, so the seat bodies are preferably arranged to move parallel to one another (between the private and sharing configuration).

In some embodiments, the seat body of the first seat unit is fixed and just the seat body of the second seat unit is moveable along the axis of the second seat unit. Such an arrangement may simplify construction of the pair of seat units.

Each seat unit may comprise an armrest on the common adjoining side of the two seat units. When the seat units are in the sharing configuration the armrests of each seat unit may be directly adjacent one another. In some embodiments of the invention, each pair of seat units comprises a fixed armrest. The fixed armrest may be for use as an armrest of the first seat unit in the private and the shared configurations, but may be for use as an armrest of the second seat unit in only the shared configuration. The arm rest may be located, and preferably centred on, the notional centre-line between the seat units.

In any of the above-mentioned aspects, the column of seat units may be a first column of seat units. The seating arrangement may further comprise a second column of seat units located on the other side of, but adjacent to, the aisle, the second column of seat units also extending in a longitudinal direction parallel to the longitudinal axis of the aircraft cabin. The second column is preferably arranged in the same manner as the first column and any features described with reference to the first column may be applicable to the second column.

The passenger seating arrangement has been found to be especially beneficial for a single aisle aircraft because the seating arrangement tends to be space-efficient whilst still facilitating direct access to each seat unit from the aisle. Thus, the first column may be positioned adjacent a sidewall of the cabin and second column may be positioned adjacent the opposing sidewall of the cabin.

In some embodiments of the invention, the seating arrangement may nonetheless also be used on a twin aisle aircraft. Thus, the first column may be positioned adjacent a sidewall of the cabin and second column may be positioned adjacent a second aisle. The arrangement may further comprises a third column of pairs of seat units between the opposing sidewall and the second aisle. The third column may be arranged in the same manner as the first or second column and any features described with reference to the first or second column may be applicable to the third column. Thus, the cabin may be for a twin-aisle aircraft, and the seating arrangement may comprise three equal-width columns of pairs of seat units extending along the cabin. Having equal-width columns in both the centre and the sides of the cabin has been found to be more space-efficient than some arrangements having a double-width central column (e.g. US 8,348,195).

According to yet another aspect, there is provided a passenger seating arrangement in a single aisle aircraft cabin, the passenger seating arrangement comprising a first column of lie-flat seat units located on one side of the single aisle, and a second column of lie-flat seat units located on the other side of the aisle, wherein: each column comprises a multiplicity of seat units arranged in an inwardly-facing herringbone layout in which the multiplicity of seat units face inwardly towards the aisle, wherein the seat units are arranged in pairs, and wherein: (a) each pair of seat units is associated with a shared entrance way for providing access from the aisle exclusively to both of the seat units in that pair; or (b) the seat body of alternating seat units is staggered with respect to the seat body of the adjacent seat units, such that there is a lateral offset of alternating seat bodies to bring them closer to the aisle than the neighbouring seat units; or (c) the seat bodies of alternating seat units are moveable, along their central axes, between a private configuration in which the seat body of the second seat unit is staggered rearwards of the seat body of an adjacent, forward, seat unit, and a sharing configuration in which the seat bodies are side-by-side. The seating arrangement may comprise any, some, or all of features (a), (b) and (c).

According to yet another aspect, there is provided a pair of seat units for use in the passenger seating arrangement of any of the aspects herein. The pair of seat units is preferably suitable for use in a column of seat units located adjacent an aisle, the column of seat units and the aisle both extending in a longitudinal direction parallel to the longitudinal axis of the aircraft cabin. The pair of seat units may be suitable for use in the column with a multiplicity of substantially identical pairs of seat units arranged consecutively along the longitudinal direction. Each seat unit is configurable between a seating configuration and a flat-bed configuration. Each pair of seat units may comprise two seat units for positioning in an inwardly facing orientation towards the aisle, and at an acute angle to the longitudinal axis of the aircraft. The pair of seat units may comprise a dedicated entrance way, each entrance way being a shared entrance way for providing access from the aisle to both of the seat units in that pair. The seat units are preferably configurable in a seating configuration, in which a seat body of a second seat unit in the pair is staggered with respect to the seat body of a first seat unit in the pair such that there is an offset, in a lateral direction, between the seat body of the first seat unit and the seat body of the second seat unit, such that when the pair of seat units is installed in the column, the seat body of the second seat unit is located closer to the aisle than the seat body of the first seat unit. The pair of seat units may be configured such that in the seating configuration the seat bodies of the first and second seat units are moveable, relative to one another, in a direction parallel to the axes of the respective seat units, between a private configuration in which the seat body of the second seat unit is staggered rearwards of the seat body of the first seat unit, and a sharing configuration in which the seat bodies are substantially side-by-side to enable passengers in the respective seat units to interact.

### Description of the Drawings

Various embodiments of the invention will now be described, by way of example only, with reference to the accompanying schematic drawings of which:
Figure 1 is a plan view of a business class cabin on an aircraft according to a first embodiment of the invention;
Figure 2 is a close-up plan view of part of the arrangement of Figure 1;
Figure 3 is a perspective view of two pairs of seat units in one of the columns of the cabin of Figure 1;
Figure 4 is a perspective view of the two pairs of seat units of Figure 3, but with the seat units in the flat-bed configuration;
Figure 5a is a view of the foot receiving ends on a pair of seat units, from a viewpoint within the seat unit;
Figure 5b is the view of Figure 5a but with the ottomans hinged to a retracted position;
Figure 6 is a schematic plan view of a pair of seat units in the first embodiment showing the movement of one of the seats between a private and sharing position;
Figure 7a is a perspective view of two pairs of seat units in one of the columns of the cabin of Figure 1 with the seats in a private position;
Figure 7b is the perspective view of Figure 7a but with the seat units in the sharing position;
Figure 8 is a schematic plan view of a pair of seat units in the first embodiment showing the lateral offset between the seat units;
Figure 9 is a diagram to illustrate the length saving created by the offset shown in Figure 8;
Figure 10 is a plan view of the pair of seat units of Figure 8 but showing the units in the flat-bed configuration; and
Figure 11 is a plan view of a business class cabin on an aircraft according to a second embodiment of the invention.

### Detailed Description

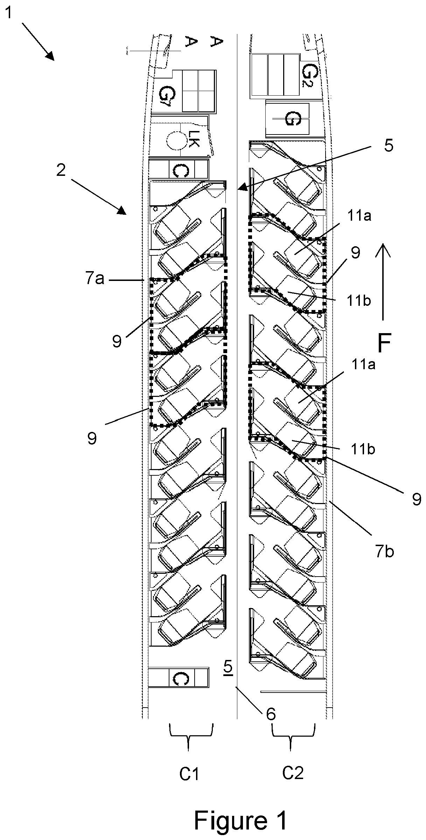

Figure 1 is a schematic plan view of part of a passenger seating arrangement 1 according to a first embodiment of the invention. A passenger seating arrangement 1 is in the business class section of an aircraft cabin 2.

The passenger seating arrangement 1 comprises a first column of seat units C1 and second column of seat units C2. The first and second columns C1, C2 are separated by an aisle 5 aligned with the longitudinal axis 6 of the cabin. The columns of seat units C1, C2 and the aisle 5 all extend in a longitudinal direction parallel to longitudinal axis 6 of the cabin 2 (also parallel to the flight direction F). The aircraft cabin is defined by sidewalls 7a, 7b. The cabin 2 comprises several non-seating areas, such as galleys and lavatories, but these are largely conventional and are not described further with reference to the present invention.

Each column C1, C2 comprises several pairs 9 of seat units (example pairs 9 in each column are highlighted by way of a schematic thicker dashed outline in Figure 1). The pairs 9 of seat units in each column C1, C2, are substantially identical except for their orientation/position.

In each column C1, C2, the pairs 9 of seat units are arranged adjacent to one another along the longitudinal direction (i.e. neighbouring pairs 9 of seat units are located along the length of each column C1, C2).

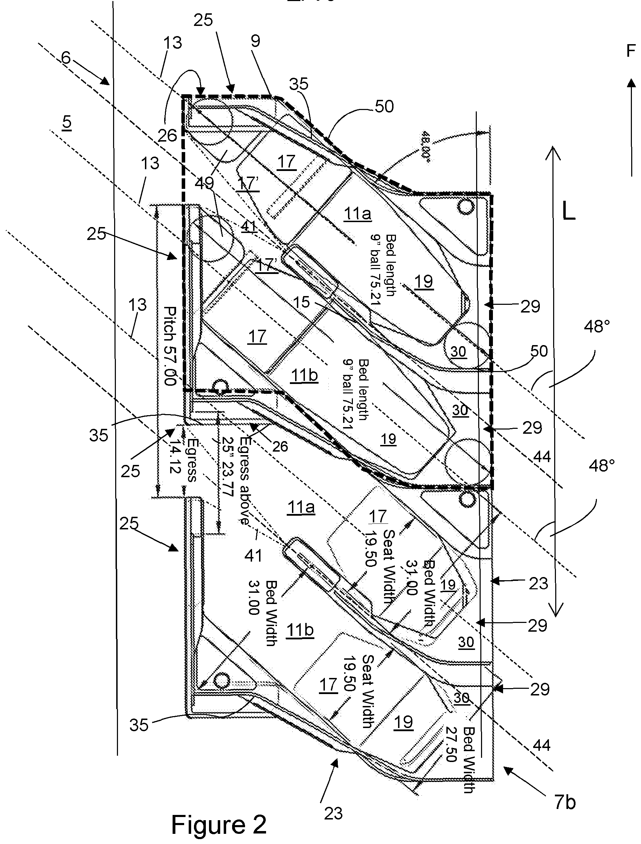

Figure 2 shows two adjacent pairs 9 of seat units in isolation, and features of one of those pairs of seat units are described below in detail. The two pairs of seats in Figure 2 are taken from column C2. In the description below, where reference is made to only the one pair 9 of seat units, or to only one seat unit 11a, 11b within that pair, it will be appreciated that the description applies equally to other corresponding pairs 9 or other corresponding seat units 11a, 11b in the seating arrangement 1. Also, for the sake of clarity, not all reference numerals used in the Figures are necessarily repeated in the other Figures nor are they necessarily shown for every occurrence of that feature. The other seat units shown in the Figures do, of course, have those features but some of them are merely not labelled.

Referring now to Figure 2, a pair 9 of seat units comprises: a fore seat unit 11a (e.g. foremost (top of the page) in Figure 2) and an aft seat unit 11b located directly behind it). The fore and aft seat units 11a, 11b are angled at 48 degrees to the longitudinal direction L (which is parallel to the longitudinal axis 6 of the cabin and the direction of flight). Both the seat units 11a, 11b face inwardly towards the aisle 5.

The angle of the seat unit to the longitudinal direction is measured by the angle that the central seat unit axis 13 makes with the longitudinal direction L (and the aisle axis 6). The central axis of a seat unit is the axis that bisects the seat body of the respective seat unit 11a/11b.

Both seat units 11a, 11b face forwards (relative to the direction of flight F. For the avoidance of doubt the references herein to 'fore' and 'aft' seat units 11a, 11b within a pair 9, relate to their spatial position relative to each other, and are not necessarily references to their orientation (i.e. whether they face forwards or backwards). In some embodiments (not shown) each pair of seat units may comprise a fore and an aft seat unit that both face backwards.

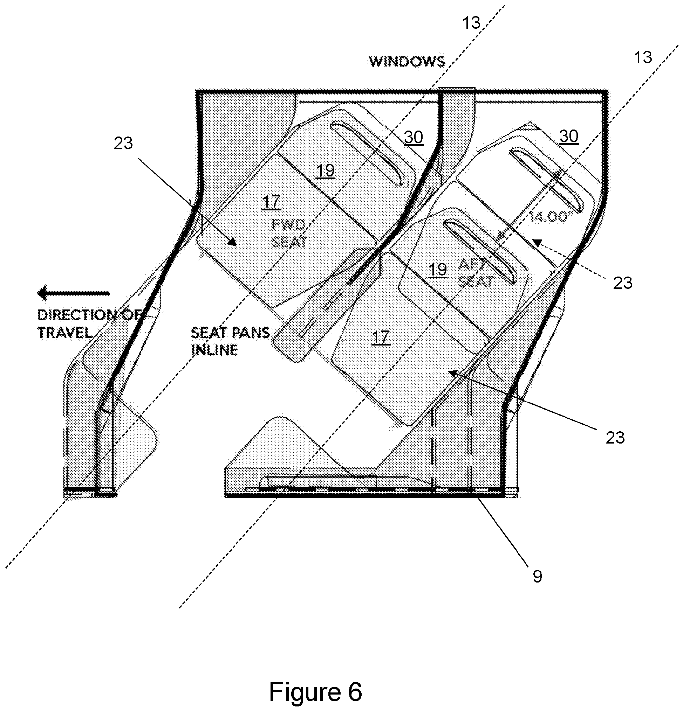

The fore seat unit 11a and aft seat unit 11b in each pair 9 of seat units, border each other along an intra-pair privacy screen 15 that lies along a shared boundary. At least part of that boundary runs parallel to the central axis 13 of the seat units (i.e. at 48 degrees to the longitudinal direction L). The privacy screen 15 is discussed in more detail below with reference to Figures 6 to 7b.

Each pair 9 is separated from the adjacent pair by an inter-pair screen 35 extending all the way from the sidewall 7b to the aisle 5.

Each seat unit 11a, 11b comprises a seat body 23 and a foot receiving end 25.

The seat body 23 has a moveable seat pan 17 and a movable back rest 19. A leg support 21 is fixed relative to the seat pan, but extends downwardly therefrom. The moveable seating elements 17, 19 are configurable from a seating configuration into a lie flat configuration (described in more detail below)

The shape and structure of the seat bodies 23 of the fore and aft seat units are substantially identical (except where described below). However, the side furniture associated with each seat body, and the foot receiving ends 25 do differ.

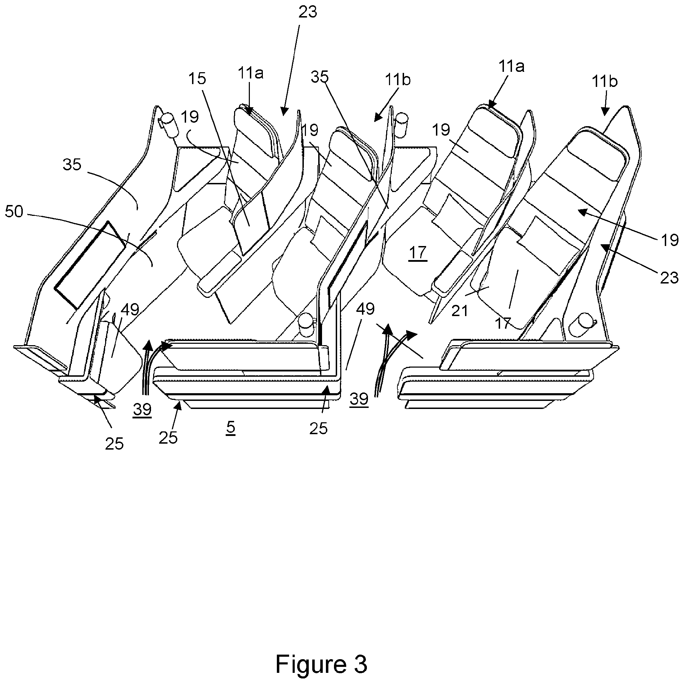

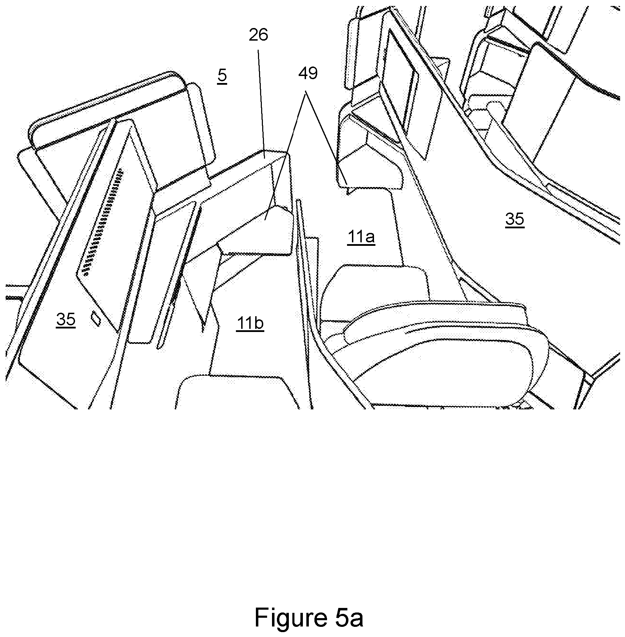

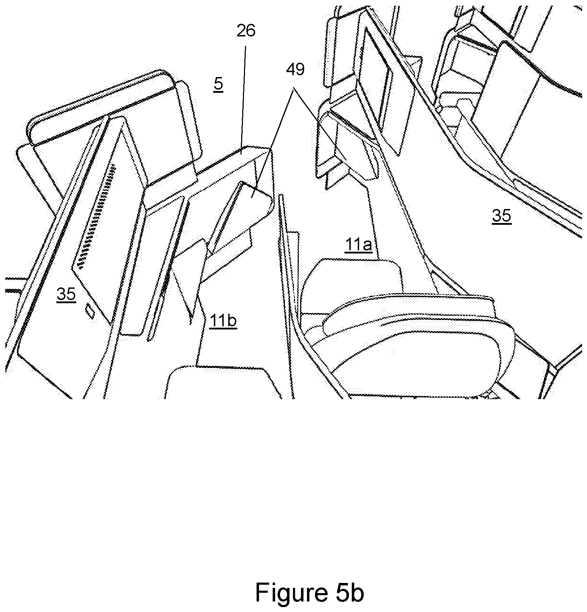

Referring to Figures 2 to 5a, the foot receiving end 25 of the fore seat unit 11a comprises an end wall 26 extending from the cabin floor along the side of the aisle 5 and then away from the aisle, to define a substantially cuboidal, partially enclosed space (best illustrated in Figures 2 or 3) into which a passenger may extend their feet. A triangular ottoman shelf 49 is hinged along a hinge line 51 extending along one side of the wall 26. The ottoman 49 is moveable into a deployed position (shown in Figures 1 to 5a) in which it is arranged to form an ancillary bed extension surface coplanar with the seat pan and back rest 17, 19 in the flat-bed configuration. The ottoman 49 is also moveable from the deployed position into a stowed position in which it is hinged upwards and held flush against the side wall 26 (see the lower pair of seat units in Figure 2, and see Figure 5b).

Referring back to Figures 2 to 5a, the foot receiving end 25 of the aft seat unit 11b comprises an end wall 26 extending from the cabin floor along the side of the aisle 5 (best illustrated in Figures 2 and 3). A triangular ottoman shelf 49 is hinged along a hinge line 51 extending along the end wall 26. As with the fore seat unit 11a, the ottoman 49 is moveable into a deployed position (shown in Figures 1 to 5a) in which it is arranged to form an ancillary bed extension surface coplanar with the seat pan and back rest 17, 19 in the flat-bed configuration. The ottoman 49 is also moveable from the deployed position into a stowed position in which it is hinged upwards and held flush against the side wall 26 (see the lower pair of seat units in Figure 2, and see Figure 5b).

The moveable ottoman is beneficial in terms of access to the seat units 11a, 11b (discussed in more detail below).

Each seat unit 11a, 11b in a pair of seat units 9 also has a head receiving end 29 for receiving the head of a passenger, especially in the flat-bed configuration. The head receiving end 29 is generally located between the side wall 7b, the rear of the seat back 19 and the outward ends of the screens 35, 15, within which is defined rearward space. The end 29 comprises ancillary bed extension surfaces 30 with which the seat back 19 is coplanar when the seat unit 11a, 11b is in the bed configuration.

As briefly described above, each seat unit 11a, 11b is configurable between a seating configuration and a flat-bed configuration. In the flat-bed configuration. The flat sleeping surface is formed from the moveable seat elements 17, 19, being mutually coplanar, and also being coplanar with the ancillary bed extension surface 30 located in the rearward space at the head receiving end 29, and with the ottoman 49 (when deployed). Together, these surfaces form a useable bed length of just over 75 inches when the seat unit is in the flat-bed configuration.

The use of moveable seat elements and conversion between a seating configuration and a lie-flat configuration is known per se and will not be described in further detail herein. The benefits enabled by embodiments of the present invention tend to instead reside in other aspects of the seat units, and their layout, as will now be described in more detail.

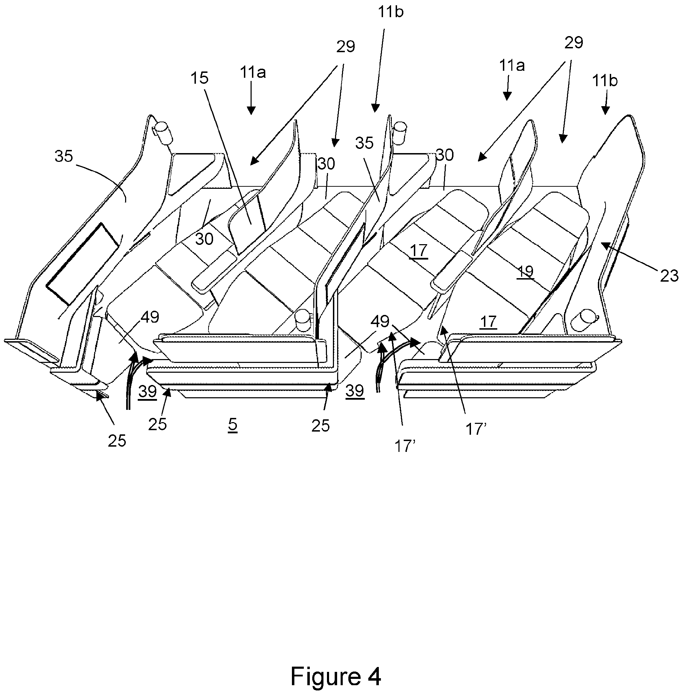

Firstly, referring to Figure 3, it can be seen that for each pair 9 of seat units, between the end walls 26 of the foot receiving ends 25 of the fore and aft seat units 11a 11b, there is defined a shared entrance way 39. The shared entrance way 39 provides obstacle free access from the aisle 5 to both of the seat units 11a, 11b in that pair 9. An obstacle free access path, shown with large arrows in Figures 3 and 4, extends from the shared entrance way 39 to the seat units 11a, 11b and allows a passenger to access either of the seat units, independent of what configuration (seating or flat-bed) the seat unit are in.

The first embodiment of the invention recognises that, in the context of an inwardly facing herringbone arrangement, the packing efficiency of the seating arrangement can be improved by providing shared entrance ways 39 to two seat units 11a, 11b. For example, the floor-space that would otherwise be used for a dedicated entrance to only, for example, the aft seat unit 11b, can instead be occupied by part of that seat unit. For example, this 'saved space' may instead be occupied by additional side furniture/storage, seat/bed width/length or by a combination of the above.

A feeling of privacy remains important, and accordingly between each pair of seat units 9 is an inter-pair privacy screen 35. Each pair 9 of the seat units also comprise an intra-pair screen 15 that extends between the fore and aft seat units 11a, 11b. The intra-pair screen 15 extends sufficiently far from the sidewall 7b, to obstruct a line of sight between passengers in those fore and aft seat units. The intra-pair screen 15 and inter-pair screen 35 are located above a perimeter wall 50 associated with each seat unit. Unlike some seat units in the prior art, the perimeter wall, does not extend all the way along the mutual boundary between adjacent seat units 11a, 11b. Instead, in the first embodiment of the invention, the perimeter wall 50 and privacy screen 15 extends only part-way between the mutual boundary of the fore seat unit 11a and the aft seat unit 11b of each pair, such that it leaves an opening 41 (schematically indicated by dash-dot lines in Figure 2) through which a passenger may pass to access the respective seat units (via the shared entrance way 39). The openings 41 of the fore and aft seat units are located on a common adjoining side facing a notional centre-line 44 between the seat units 11a, 11b (which is parallel to the intra-pair privacy screen 15).

It has been recognised that a sense of privacy and personal space may be obtained whilst not necessarily fully enclosing both sides of each seat unit. This thus allows access to both seat units 11a, 11b via the shared entrance way 39, whilst maintaining privacy.

The seat pans 17 of the seat units 11a, 11b in the first embodiment of the invention all comprise a chamfered corner 17'. The chamfered corner 17' is on the left-hand side of the seat pans 17 on the fore seat units 11a (as viewed locally to that seat unit) and the chamfered corner 17' is on the right-hand side of the seat pans 17 on the aft seat units 11b. This means that the chamfers are on the common adjoining side of the two seat units such that they tend to complement each other when the seat pans are in the flat-bed configuration; i.e. the chamfered corners 17' enable part of the cabin floor area to remain accessible such that it can be used by a passenger when accessing the seat unit. This is best illustrated in the upper pair 9 of Figure 2 and in Figure 4.

Another advantage of the first embodiment of the invention resides in the ability to allow passengers in a pair 9 of seat units to selectively decide whether to be in a private configuration or a sharing configuration. This will now be explained further with reference to Figures 6 to 7b.

Figure 6 is a schematic showing an example pair of seat units 9. As with a conventional seat unit, the seat body 23 of the fore seat unit 11a is fixed (in the sense that it cannot slide forward/backwards whilst maintaining the same upright configuration - although it will be appreciated that it can recline/convert to the flat-bed). In contrast, in the first embodiment of the invention, the seat body 23 of the aft seat unit 11b can move. More specifically, when the aft seat unit 11b is in the seat configuration the seat body can slide forwards or backwards in a direction along the central axis 13 of the seat unit 11b.

As a default, the seat body 23 is in a position in which it is located at its rearmost extent in the seat unit 11b. This largely mirrors the position of the seat body of the fore seat unit 11a, in the sense that it is located against the ancillary surfaces 30 in the rearward space. This seat body position is shown in phantom in Figure 6 (labelled with the dashed arrow 23). Since the seat units are in a herringbone formation, it will be appreciated that in this position, the seat body of the aft seat unit 11b is staggered rearwards relative to the seat body 23 of the fore seat unit 11a.

The passenger in the aft seat unit 11b can slide the seat body 23 fourteen inches forward, from this default position, into a position in which it is side-by-side with the seat body 23 of the fore seat unit 11a. This is shown by the lightly shaded images of the seat bodies 23 in Figure 6. When the seat bodies are side-by-side, the front edges of the seat pans are substantially in line (i.e. in line in a direction perpendicular to the central axes 13 - see double-headed arrow in Figure 6).

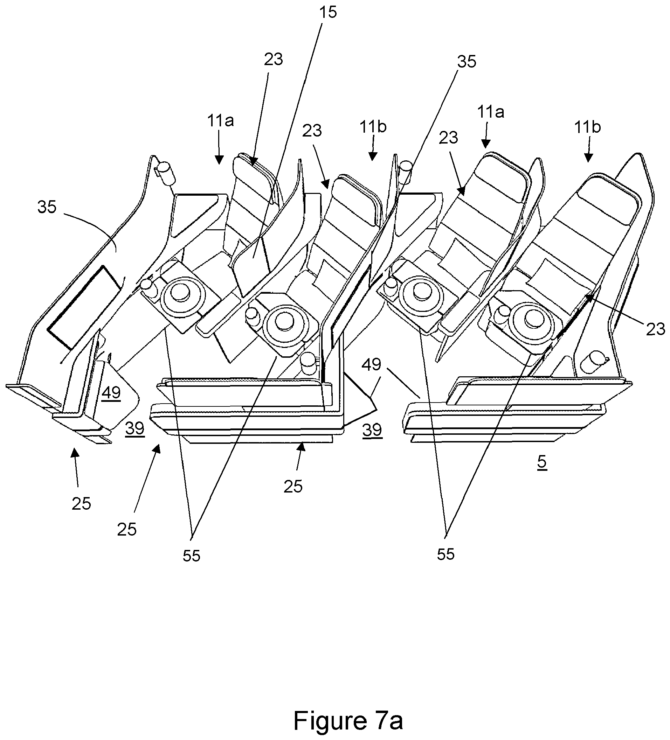

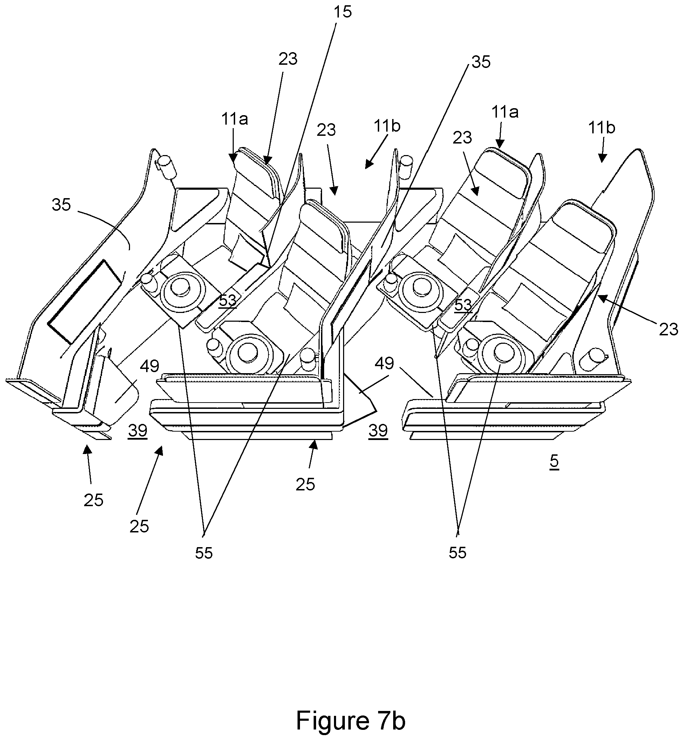

Such an arrangement in which the seat bodies can move relative to one another along their central axis is especially beneficial in terms of providing an (optional) configuration in which the privacy between the seat units 11a, 11b is removed such that the passengers can better interact. This is illustrated in Figures 7a and 7b to which reference is now made.

Figure 7a shows two adjacent pairs 9 of the seat units. All the seats units have a bi-fold table 55 deployed in front of the seat body 23 such that are laid out for dining. Both pairs are in a private configuration in which the seat body 23 of the aft seat unit is moved fully rearwards such that it is staggered behind the seat body 23 of the fore seat unity 11a. The intra-pair privacy screen 15 shields the seat body 23 of the fore seat unit 11a from a passenger in the after seat unit (and vice versa). Such an arrangement would be the default configuration for the pairs of seat units 9.

Figure 7b shows the pairs 9 of seat units in a sharing configuration. In the sharing configuration, the seat body 23 of the aft seat unit 11b has been moved forwards to bring it in line with the seat body 23 of the fore seat unit 11a in that pair 9. A central armrest 53 lying on the common boundary between the seat units 11a, 11b is accessible at all times from the fore seat 11a, but only accessible to the aft seat when it is in this sharing configuration.

The pair 9 on the left-hand side of Figure 7b has also adopted an extra feature that further improves the sharing experience. Notably, a portion of the intra-pair privacy screen 15 has been lowered into the perimeter wall 50 below to allow passengers to readily interact and converse across the common boundary between the seat units.

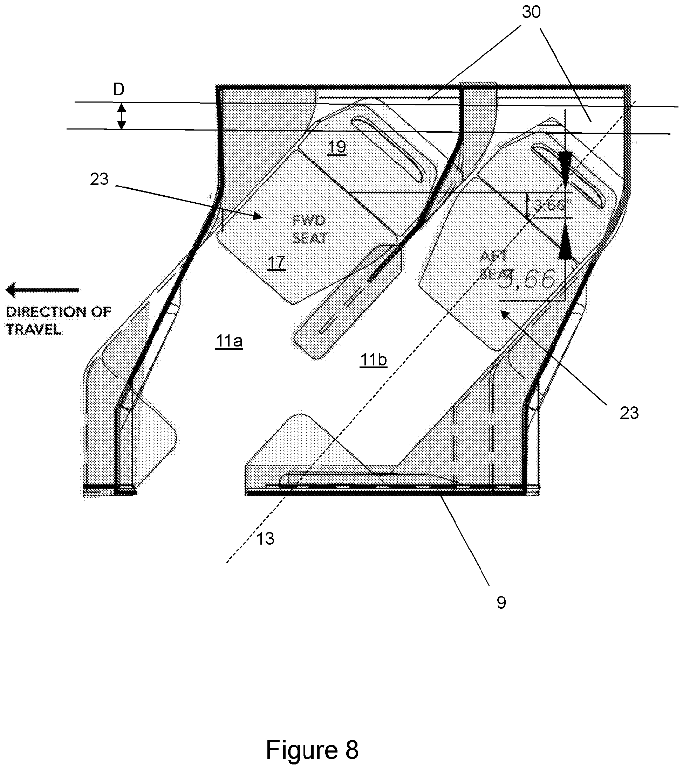

Another advantage of the first embodiment of the invention resides in the space-efficiency of the layout (i.e. the number of seat units that can be arranged in a given cabin area). An aspect of this will now be explained further with reference to Figures 8 to 10.

Figure 8 is a schematic plan view of a pair of seat units in the first embodiment, when they are in the seat configuration (and in the private configuration). Two sets of parallel lines are shown extending through common points on each seat body 23 (the top pair of lines pass through the corner of the seat back 19, the bottom pair of lines pass through the point at which the central axis 13 meets the base of the seat back 19/the seat pan 17). As is clearly illustrated by the pairs of lines, the seat body 23 of the aft seat unity is staggered with respect to the seat body 23 of the fore seat unit 11a such that there is an offset D of 3.66 inches, in a lateral direction, between the seat body 23 of the fore seat unit 11a and the seat body 23 of the aft seat unit 11b. The offset D is such that the seat body 23 of the aft seat unit 11b is located closer to the aisle 5 than the seat body 23 of the fore seat unit 11a. Put another way, the seat body 23 of the aft seat unit 11b is offset a distance D further from the sidewall 7b.

It will be appreciated that the stagger between the seat bodies 23 is measured along the axes 13 of the seat units, whereas the offset D is in the lateral direction (perpendicular to the longitudinal direction L). Since the seat units are all at an acute angle to the longitudinal direction, the change in stagger tends to equate to both a lateral and a longitudinal movement of the seat body (effectively the other two sides of a triangle with a hypotenuse aligned with the central axis 13).

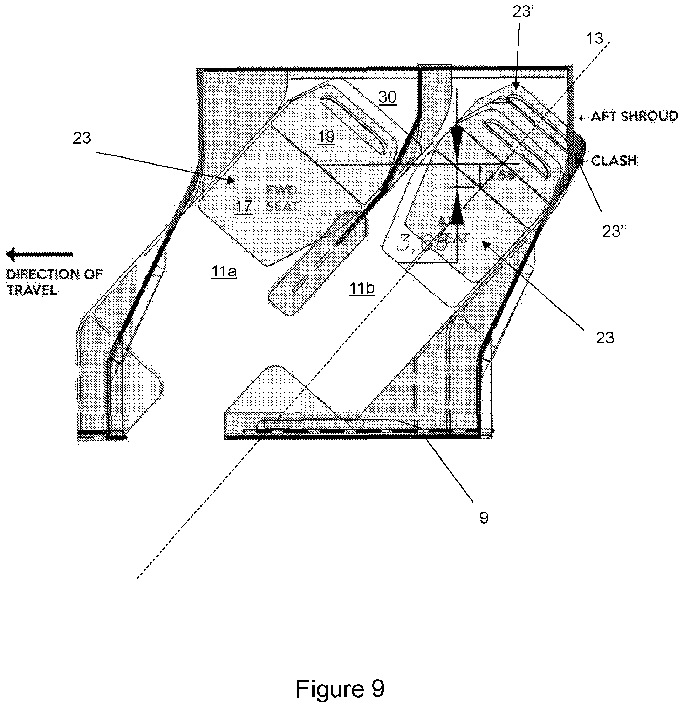

It is the accepted design wisdom that in a herringbone arrangement, each seat unit in a column should be staggered with respect to the adjacent seat such that they are all at the same lateral position as the other seat units in that column (for example see WO03013903 (Virgin Atlantic)). To date, this has been considered the most space-efficient approach (for a given bed length) because it was thought to optimise the use of the space close to the sidewall. This aspect of the present invention recognises that an overall space saving can be obtained by staggering the seat body 23 of the aft seat unit differently; specifically, by staggering it such that there is the lateral offset D, the overall longitudinal extent of the pair 9 of seat units can be reduced. This reduction is illustrated in Figure 9, to which reference is now made.

Figure 9 shows a notional seat body 23' of the aft seat unit 11b, shown in the position it would be without any lateral offset from the seat body 23 of the fore seat unit 11a. It can be seen that the top left corner of the seat back must necessarily be moved rearwards; the corner 23'' of the notional seat body therefore protrudes beyond the inter-pair screen 35 (see the corner shown in dark shading in Figure 9). To fit this structure in the screen/shroud would necessarily have to me move and the overall length of the pair 9 (in the longitudinal direction) would need to be increased by 3.05 inches (3.66/tan(48)).

By providing the offset for the aft seat unit in each pair 9, the overall length of each pair is reduced and an improved packing efficiency can be obtained (for example in cabins that are of a size in which this saving allows an extra pair of seat units to be included).

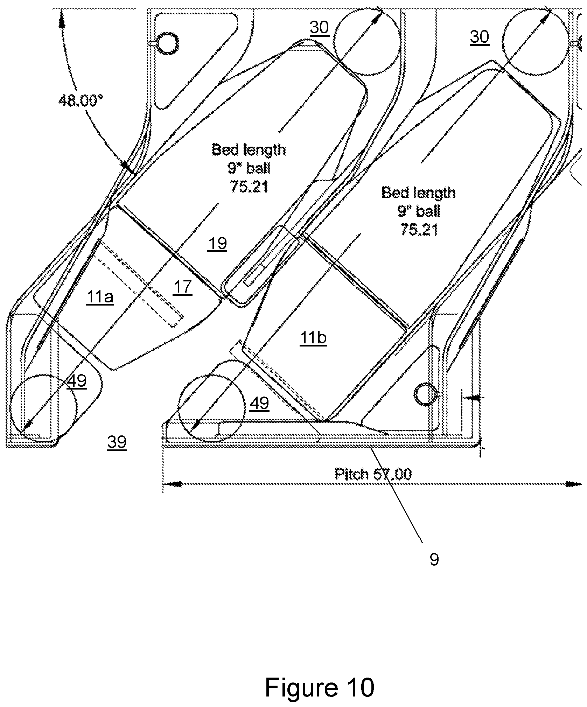

Referring now to Figure 10, this shows the pair 9 of seat units in the flat-bed configuration. It is desirable to provide equal bed length for both the fore and aft seat units because it provides a common passenger experience regardless of the seat units they occupy. The first embodiment of the invention achieves this by allocating different proportions of the flat sleeping surface between the moveable elements 17, 19, the ottoman 49/foot receiving end 25 and the rearward space/ancillary bed extension surfaces 30.

Figure 10 shows the useable bed length (the maximum length between notional 9-inch balls at either end of the seat units). As can be seen by comparing the foot receiving ends and the head receiving ends of the fore seat unit 11a with the aft seat unit 11b, the aft seat unit uses (compared to the fore seat unit) more of the rearward space on the ancillary surface 30 but less of the space in the foot receiving end. The pair of seat units thus provides seat units with the same useable bed length, whilst obtaining a space-efficient longitudinal dimension.

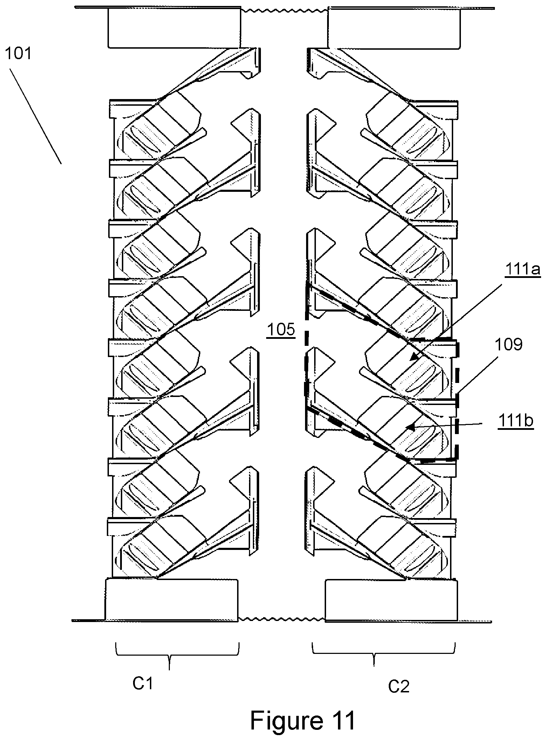

It will be appreciated that in other embodiments of the invention, the pairs of seat units need not necessarily have all, or the same combination, of the above-mentioned features. For example, Figure 11 shows a cabin layout in a second embodiment of the invention. The pairs 109 of seat units 111a, 111b, each comprise a shared entrance way (as per the first embodiment) and the aft seat unit 111b in each pair is moveable relative to the fore seat 111a (as per the first embodiment). However, the seat body of the aft seat unit 111b is not staggered with respect to the seat body of the fore seat unit 111a (i.e. such that in this embodiment there is no offset in a lateral direction and the seat bodies are all aligned in a direction along the cabin axis). In this cabin of the second embodiment, the seat units can be arranged within the space available, without the need to provide the offset. In other example embodiments (not shown) the layout may only have a different one, or have a different combination, of the above mentioned features.

According to another embodiment of the invention (not shown) the passenger seating assembly is provided on a twin aisle aircraft. The arrangement comprise three parallel columns of pairs of seat units. Two columns are substantially as described herein with reference to the first embodiment, except that column C2 is adjacent a second aisle instead of the sidewall 7b. The other side of that aisle is another column, substantially identical to C2, but adjacent the sidewall. In another twin-aisle arrangement the central column is double-width and is symmetrical along the longitudinal axis of the aircraft.

Whilst the present invention has been described and illustrated with reference to particular embodiments, it will be appreciated by those of ordinary skill in the art that the invention lends itself to many different variations not specifically illustrated herein. For example, in other embodiments, the seat units may face backwards.

Where in the foregoing description, integers or elements are mentioned which have known, obvious or foreseeable equivalents, then such equivalents are herein incorporated as if individually set forth. Reference should be made to the claims for determining the true scope of the present invention. It will also be appreciated by the reader that integers or features of the invention that are described as preferable, advantageous, convenient or the like are optional and do not limit the scope of the independent claims.

## Claims

1. An aircraft cabin comprising a passenger seating arrangement (1) and an aisle (5), the passenger seating arrangement (1) comprising a column of seat units (C1, C2) located adjacent the aisle (5), the column of seat units (C1, C2) and the aisle (5) both extending in a longitudinal direction parallel to the longitudinal axis (6) of the aircraft cabin (2), and wherein
the column (C1, C2) comprises a multiplicity of pairs of seat units (11A, 11B) arranged consecutively along the longitudinal direction,
and within the column the pairs of seat units are arranged in the same orientation,
wherein each seat unit (11A, 11B) is configurable between a seating configuration and a flat-bed configuration, and
each seat unit (11A, 11B) having a seat body (23) comprising moveable seating elements (17, 19) arranged such that when the seat unit is in the seating configuration the seating elements form a passenger seat but when the seating unit is in the flat-bed configuration, the seating elements form a substantially flat sleeping surface,
and wherein each pair (9) of seat units (11A, 11B) comprises a first seat unit and a second seat unit, the first and second seat units both being angled at an acute angle to the longitudinal axis of the aircraft cabin and both facing inwardly towards the aisle,
and wherein in the seating configuration the seat bodies of the first and second seat units (11A, 11B) are moveable, relative to one another, in a direction parallel to the axes of the respective seat units, between a private configuration in which the seat body (23) of the second seat unit (11B) is staggered rearwards of the seat body (23) of the first seat unit (11A), and a sharing configuration in which the seat bodies are substantially side-by-side to enable passengers in the respective seat units to interact.

2. An aircraft cabin comprising a passenger seating arrangement (1) and an aisle (5) according to claim 1, wherein the seat body (23) of the first seat unit (11A) is fixed and the seat body of the second seat unit (11B) is moveable along the axis of the second seat unit.

3. An aircraft cabin comprising a passenger seating arrangement (1) and an aisle (5) according to claim 1 or claim 2, wherein the seat body (23) of each seat unit (11A, 11B) is arranged to maintain the same orientation in both the private and the shared configuration.

4. An aircraft cabin comprising a passenger seating arrangement (1) and an aisle (5) according to any preceding claim, wherein each seat unit (11A, 11B) comprises an armrest on the common adjoining side of the two seat units.

5. An aircraft cabin comprising a passenger seating arrangement (1) and an aisle (5) according to claim 4, wherein when the seat units (11A, 11B) are in the sharing configuration the armrests (53) of each seat unit are directly adjacent one another.

6. An aircraft cabin comprising a passenger seating arrangement (1) and an aisle (5) according to any preceding claim, wherein each pair of seat units (11A, 11B) is associated with a dedicated entrance way (39), each entrance way (39) being a shared entrance way (39) for providing access from the aisle (5) to both of the seat units (11A, 11B) in that pair (9).

7. An aircraft cabin comprising a passenger seating arrangement (1) and an aisle (5) according to any preceding claim , wherein in each pair (9), when the seat units (11A, 11B) are in the seating configuration, the seat body (23) of the second seat unit (11B) is staggered with respect to the seat body of the first seat unit (11A) such that there is an offset, in a lateral direction, between the seat body of the first seat unit and the seat body of the second seat unit, such that the seat body of the second seat unit is located closer to the aisle (5) than the seat body of the first seat unit.

8. An aircraft cabin comprising a passenger seating arrangement and an aisle (5) according to any preceding claim, wherein each pair (9) of seat units (11A, 11B) is separated from an adjacent pair (9) of seat units (11A, 11B) in the column by an inter-pair privacy screen (15).

## Patentansprüche

1. Flugzeugkabine, die eine Passagiersitzanordnung (1) und einen Gang (5) umfasst, wobei die Passagiersitzanordnung (1) eine Reihe Sitzeinheiten (C1, C2) umfasst, die sich neben dem Gang (5) befindet, wobei sowohl die Reihe Sitzeinheiten (C1, C2) als auch der Gang (5) in einer Längsrichtung parallel zur Längsachse (6) der Flugzeugkabine (2) verlaufen, und wobei
die Reihe (C1, C2) eine Vielzahl von Paaren von Sitzeinheiten (11A, 11B) umfasst, die hintereinander entlang der Längsrichtung angeordnet sind,
und innerhalb der Reihe die Paare von Sitzeinheiten in derselben Orientierung angeordnet sind,
wobei jede Sitzeinheit (11A, 11B) konfigurierbar ist zwischen einer Sitzkonfiguration und einer Flachbettkonfiguration, und
jede Sitzeinheit (11A, 11B) einen Sitzkörper (23) besitzt, der bewegliche Sitzelemente (17, 19) umfasst, die so angeordnet sind, dass wenn die Sitzeinheit sich in der Sitzkonfiguration befindet, die Sitzelemente einen Passagiersitz bilden, wenn sich die Sitzeinheit aber in der Flachbettkonfiguration befindet, die Sitzelemente eine im Wesentlichen flache Schlaffläche bilden,
und wobei jedes Paar (9) von Sitzeinheiten (11A, 11B) eine erste Sitzeinheit und eine zweite Sitzeinheit umfasst, wobei die erste und die zweite Sitzeinheit beide in einem spitzen Winkel zur Längsachse der Flugzeugkabine angewinkelt sind und beide nach innen dem Gang zugewandt sind,
und wobei in der Sitzkonfiguration die Sitzkörper der ersten und der zweiten Sitzeinheit (11A, 11B) relativ zueinander beweglich sind, in einer Richtung parallel zu den Achsen der entsprechenden Sitzeinheiten, zwischen einer Privat-Konfiguration, bei der der Sitzkörper (23) der zweiten Sitzeinheit (11B) zum Sitzkörper (23) der ersten Sitzeinheit (11A) nach hinten versetzt ist, und einer Gemeinsam-Konfiguration, bei der sich die Sitzkörper im Wesentlichen Seite an Seite befinden, um zu ermöglichen, dass die Passagiere in den jeweiligen Sitzeinheiten miteinander interagieren können.

2. Flugzeugkabine, die eine Passagiersitzanordnung (1) und einen Gang (5) umfasst, gemäß Anspruch 1, wobei der Sitzkörper (23) der ersten Sitzeinheit (11A) feststehen ist und der Sitzkörper der zweiten Sitzeinheit (11B) entlang der Achse der zweiten Sitzeinheit beweglich ist.

3. Flugzeugkabine, die eine Passagiersitzanordnung (1) und einen Gang (5) umfasst, gemäß Anspruch 1 oder Anspruch 2, wobei der Sitzkörper (23) einer jeden Sitzeinheit (11A, 11B) so angeordnet ist, dass dieselbe Orientierung sowohl in der Privat-Konfiguration als auch in der Gemeinsam-Konfiguration eingenommen wird.

4. Flugzeugkabine, die eine Passagiersitzanordnung (1) und einen Gang (5) umfasst, gemäß einem vorhergehenden Anspruch, wobei jede Sitzeinheit (11A, 11B) eine Armlehne an der gemeinsamen angrenzenden Seite der beiden Sitzeinheiten umfasst.

5. Flugzeugkabine, die eine Passagiersitzanordnung (1) und einen Gang (5) umfasst, gemäß Anspruch 4, wobei, wenn die Sitzeinheiten (11A, 11B) sich in der Gemeinsam-Konfiguration befinden, die Armlehnen (53) einer jeden Sitzeinheit sich direkt nebeneinander befinden.

6. Flugzeugkabine, die eine Passagiersitzanordnung (1) und einen Gang (5) umfasst, gemäß einem vorhergehenden Anspruch, wobei jedes Paar Sitzeinheiten (11A, 11B) mit einem zugehörigen Eingang (39) verbunden ist, wobei jeder Eingang (39) ein gemeinsam genutzter Eingang (39) ist, der vom Gang (5) Zutritt zu beiden Sitzeinheiten (11A, 11B) im Paar (9) gewährt.

7. Flugzeugkabine, die eine Passagiersitzanordnung (1) und einen Gang (5) umfasst, gemäß einem vorhergehenden Anspruch, wobei bei jedem Paar (9), wenn sich die Sitzeinheiten (11A, 11B) in der Sitzkonfiguration befinden, der Sitzkörper (23) der zweiten Sitzeinheit (11B) in Bezug auf den Sitzkörper der ersten Sitzeinheit (11A) versetzt ist, so dass, in lateraler Richtung, ein Versatz zwischen dem Sitzkörper der ersten Sitzeinheit und dem Sitzkörper der zweiten Sitzeinheit besteht, so dass der Sitzkörper der zweiten Sitzeinheit sich näher am Gang (5) befindet als der Sitzkörper der ersten Sitzeinheit.

8. Flugzeugkabine, die eine Passagiersitzanordnung und einen Gang (5) umfasst, gemäß einem vorhergehenden Anspruch, wobei jedes Paar (9) Sitzeinheiten (11A, 11B) von einem benachbarten Paar (9) Sitzeinheiten (11A, 11B) in der Reihe durch einen Sichtschutz (15) zwischen den Paaren getrennt ist.

## Revendications

1. Cabine d'avion comprenant un agencement de siège passager (1) et une allée (5), l'agencement de siège passager (1) comprenant une colonne d'unités de sièges (C1, C2) située de manière adjacente à l'allée (5), la colonne d'unités de sièges (C1, C2) et l'allée (5) s'étendant toutes deux dans une direction longitudinale parallèle à l'axe longitudinal (6) de la cabine d'avion (2) et dans laquelle
la colonne (C1, C2) comprend une multiplicité de paires d'unités de sièges (11A, 11B) agencées consécutivement le long de la direction longitudinale,
et dans la colonne, les paires d'unités de sièges sont agencées dans la même orientation,
dans laquelle chaque unité de siège (11A, 11B) est configurable entre une configuration assise et une configuration allongée, et
chaque unité de siège (11A, 11B) présentant un corps de siège (23) comprenant des éléments d'assise mobiles (17, 19) agencés de sorte que, lorsque l'unité de siège est dans la configuration assise, les éléments d'assise forment un siège passager mais lorsque l'unité de siège est dans la configuration allongée, les éléments d'assise forment une surface de repos sensiblement plane,
et dans laquelle chaque paire (9) d'unités de sièges (11A, 11B) comprend une première unité de siège et une seconde unité de siège, la première et la seconde unités de siège étant toutes deux inclinées selon un angle aigu par rapport à l'axe longitudinal de la cabine d'avion et toutes deux étant orientées vers l'intérieur vers l'allée,
et dans laquelle, dans la configuration assise, les corps de siège de la première et de la seconde unités de siège (11A, 11B) sont mobiles, l'une par rapport à l'autre, dans une direction parallèle aux axes des unités de siège respectives, entre une configuration privée dans laquelle le corps de siège (23) de la seconde unité de siège (11B) est décalé vers l'arrière du corps de siège (23) de la première unité de siège (11A), et une configuration partagée dans laquelle les corps de siège sont sensiblement côte-à-côte pour permettre aux passagers dans les unités de siège respectives d'interagir.

2. Cabine d'avion comprenant un agencement de siège passager (1) et une allée (5) selon la revendication 1, dans laquelle le corps de siège (23) de la première unité de siège (11A) est fixe et le corps de siège de la seconde unité de siège (11B) est mobile le long de l'axe de la seconde unité de siège.

3. Cabine d'avion comprenant un agencement de siège passager (1) et une allée (5) selon la revendication 1 ou la revendication 2, dans laquelle le corps de siège (23) de chaque unité de siège (11A, 11B) est agencé de façon à maintenir la même orientation tant dans la configuration privée que partagée.

4. Cabine d'avion comprenant un agencement de siège passager (1) et une allée (5) selon l'une quelconque des revendications précédentes, dans laquelle chaque unité de siège (11A, 11B) comprend un accoudoir sur le côté de jonction commun des deux unités de siège.

5. Cabine d'avion comprenant un agencement de siège passager (1) et une allée (5) selon la revendication 4, dans laquelle, quand les unités de siège (11A, 11B) sont dans la configuration partagée, les accoudoirs (53) de chaque unité de siège sont directement adjacents l'un à l'autre.

6. Cabine d'avion comprenant un agencement de siège passager (1) et une allée (5) selon l'une quelconque des revendications précédentes, dans laquelle chaque paire d'unités de siège (11A, 11B) est associée à une voie d'entrée dédiée (39), chaque voie d'entrée (39) étant une voie d'entrée partagée (39) pour donner accès depuis l'allée (5) vers les deux unités de siège (11A, 11B) dans cette paire (9).

7. Cabine d'avion comprenant un agencement de siège passager (1) et une allée (5) selon l'une quelconque des revendications précédentes, dans laquelle dans chaque paire (9), quand les unités de siège (11A, 11B) sont dans la configuration assise, le corps de siège (23) de la seconde unité de siège (11B) est décalé par rapport au corps de siège de la première unité de siège (11A) de sorte qu'il existe un décalage, dans la direction latérale, entre le corps de siège de la première unité de siège et le corps de siège de la seconde unité de siège, de sorte que le corps de siège de la seconde unité de siège est situé plus près de l'allée (5) que le corps de siège de la première unité de siège.

8. Cabine d'avion comprenant un agencement de siège passager et une allée (5) selon l'une quelconque des revendications précédentes, dans laquelle chaque paire (9) d'unités de siège (11A, 11B) est séparée d'une paire (9) d'unités de siège (11A, 11B) adjacente dans la colonne par un écran de confidentialité entre les paires (15).
